# EUROPÄISCHE PATENTANMELDUNG

(11) **EP 3 360 944 A2**
(43) Veröffentlichungstag der Anmeldung: **15.08.2018**
(21) Anmeldenummer: 18155624.2
(22) Anmeldetag: 07.02.2018
(51) Int. Cl.: C09K 3/14, B24D 3/14, B24D 11/00, B24D 3/18

(54) **SCHLEIFMITTEL**

(30) Priorität: 08.02.2017 DE 102017102500
(71) Anmelder: Klingspor AG, 35708 Haiger (DE)
(72) Erfinder: SPIES, Klaus Peter, 35708 Haiger (DE)
(74) Vertreter: advotec.

(57) **Zusammenfassung**

Es wird ein Schleifmittel vorgeschlagen, umfassend
eine Trägerschicht (4), eine Vielzahl agglomerierter Schleifkörper (6), welche auf der Trägerschicht (4) angeordnet sind und jeweils mittels eines Bindemittels gebundene Schleifkörner (8, 10, 12) umfassen, und eine Fixierschicht (16) zum Fixieren der Schleifkörper (6) auf der Trägerschicht (4). Das Bindemittel ist eine keramische Masse (7) und der agglomerierte Schleifkörper (6) ist als gesinterter agglomerierter Schleifkörper (6) ausgebildet.

## Beschreibung

Die Erfindung betrifft ein Schleifmittel zur Bearbeitung einer Werkstückoberfläche.

Ein solches Schleifmittel ist aus der Praxis bekannt und dient zum Bearbeiten der Oberfläche eines Werkstücks. Das Schleifmittel umfasst eine Trägerschicht und eine Vielzahl agglomerierter Schleifkörper. Die Schleifkörper sind auf der Trägerschicht angeordnet und jeweils mittels eines Bindemittels gebunden, so dass agglomerierte Schleifkörper ausgebildet sind. Zudem umfasst das Schleifmittel eine Fixierschicht zum Fixieren der Schleifkörper auf der Trägerschicht.

Unter dem Begriff Agglomerat bzw. agglomerierter Schleifkörper ist eine Verbindung von zumindest mehreren Schleifkörnern und einem Bindemittel zu verstehen, welche nach einem entsprechenden Herstellungsverfahren bzw. einer Aufbauagglomeration hergestellt ist.

Der grundsätzliche Vorteil von agglomerierten Schleifkörpern liegt insbesondere darin, dass damit versehene Schleifmittel eine bessere Standzeit im Vergleich zu herkömmlichen, mit einfacher Schleifkörnung versehenen Schleifmitteln aufweisen. Dabei ist die geschliffene Oberfläche über den gesamten Schleifprozess hinweg relativ konstant in Bezug auf Rautiefe und Schliffbild. Das wird dadurch erreicht, dass verbrauchtes, stumpfes Korn aus dem agglomerierten Schleifkörper herausbricht und benachbartes oder darunter liegendes unverbrauchtes Schleifkorn freigibt.

Agglomerierte Schleifkörper bekannter Schleifmittel sind zumeist mittels Kunstharz als Bindemittel gebunden. Ein derartiger Verbund unter Nutzung von Kunstharz weist jedoch trotzdem keine zufriedenstellende Lebensdauer und keine zufriedenstellende Schleifleistung auf.

Der Erfindung liegt daher die Aufgabe zugrunde, ein Schleifmittel mit agglomerierten Schleifkörpern und ein Verfahren zur Herstellung agglomerierter Schleifkörper zu schaffen, welche die Nachteile des Standes der Technik überwinden, insbesondere dadurch, dass eine verbesserte Lebensdauer und eine verbesserte Schleifleistung gewährleistet ist.

Diese Aufgabe ist erfindungsgemäß durch das Schleifmittel nach Anspruch 1 und durch das Verfahren zur Herstellung eines Schleifkörpers nach Anspruch 9 gelöst.

Erfindungsgemäß wird also ein Schleifmittel vorgeschlagen, umfassend eine Trägerschicht, eine Vielzahl agglomerierter Schleifkörper, welche auf der Trägerschicht angeordnet sind und jeweils mittels eines Bindemittels gebundene Schleifkörner umfassen, und eine Fixierschicht zum Fixieren der Schleifkörper auf der Trägerschicht. Das erfindungsgemäße Schleifmittel zeichnet sich dadurch aus, dass das Bindemittel eine keramische Masse ist und die agglomerierten Schleifkörper als gesinterte agglomerierte Schleifkörper ausgebildet sind.

Bei Vergleichsversuchen zwischen einem erfindungsgemäßen Schleifmittel und einem Referenzschleifmittel (CS 326) hat sich überraschender Weise gezeigt, dass das erfindungsgemäße Schleifmittel im Vergleich zu bekannten Schleifmitteln eine höhere Lebensdauer sowie eine signifikant verbesserte Schleifleistung aufweist.

Während eines Schleifvorgangs, bei welchem sich das Schleifmittel und ein Werkstück relativ zueinander bewegen, wird eine im Wesentlichen aus den Schleifkörpern gebildete Wirkbeschichtung des Schleifmittels bzw. werden die Schleifkörper in Richtung der Trägerschicht abgetragen. Zu Beginn des Schleifvorgangs kommen lediglich diejenigen Schleifkörner der agglomerierten Schleifkörper mit dem Werkstück in Kontakt, welche von der flächigen Unterlage am weitesten entfernt angeordnet sind. Im zeitlichen Verlauf des Schleifvorgangs werden diese Schleifkörner abgetragen oder herausgebrochen sodass die Schleifkörper in ihrer Höhe reduziert und aufgebrochen werden. Das Aufbrechen der Schleifkörper und deren hohe Lebensdauer sind besonders einfach dadurch erreichbar, dass das Bindemittel eine keramische Masse ist, welche nach einem Sintern der Ausbildung agglomerierter Schleifkörper dient.

Das Sintern führt zu dem Vorteil, dass die Ausgangsstoffe der Schleifkörper in einfacher und dauerhafter Weise zusammengebracht werden können. Die gesinterte, keramische Masse lässt zudem die Möglichkeit einer Porosität offen, welche den Schleifkörper für Flüssigkeiten und Gase durchgängig machen kann. Derartige Vorteile sind mit dem üblicherweise verwendeten Kunstharz als Bindemittel nicht erreichbar.

Bei einer bevorzugten Ausführungsform des Schleifmittels nach der Erfindung umfasst der Schleifkörper Schleifkörner zumindest einer Kornart, welche gewählt ist aus der Gruppe umfassend Siliziumkarbid, Aluminiumoxid, Korund und/oder keramischer Korund. Siliziumkarbid zeichnet sich durch einen kristallinen Aufbau aus und ist sehr hart und kaum zäh, weshalb Schleifkörner aus Siliziumkarbid scharfkantig, spröde und bruchempfindlich sind. Korund und Aluminiumoxid weisen einen unregelmäßigen, kristallinen Aufbau auf und sind weniger hart, aber zäher als Siliziumkarbid, weshalb deren Gestalt tendenziell keilförmig ist. Dadurch bildet sich ein blockiges Korn aus. Zirkonkorund hingegen weist einen gleichmäßigen, kristallinen Aufbau auf und ist ähnlich hart, jedoch zäher als Korund und Aluminiumoxid. Schleifkörner aus Zirkonkorund weisen zumeist eine keilförmige, lockige, Tropfenform auf und sind selbstschärfend. Keramischer Korund weist einen mikrokristallinen Aufbau auf und ist vergleichsweise hart und zäh ähnlich Zirkonkorund. Keramischer Korund bildet jedoch tendenziell scharfkantiges, spitzes Korn aus, welches ebenfalls selbstschärfend ist. Durch eine Kombination verschiedener Kornarten innerhalb eines Schleifkörpers kann eine Anpassung des Schleifmittels an unterschiedliche Anforderungen ermöglicht werden.

Bei einer weiteren bevorzugten Ausführungsform des Schleifmittels nach der Erfindung umfasst jeder Schleifkörper unterschiedliche Kornarten, deren Schleifkörner unterschiedliche Korngrößen aufweisen. Es hat sich in Versuchen gezeigt, dass dadurch die Lebensdauer des Schleifmittels verbessert werden und eine verbesserte Anpassung des Schleifmittels an die gewünschte Anwendung erfolgen kann.

Bei einer weiteren bevorzugten Ausführungsform des Schleifmittels nach der Erfindung ist die Fixierschicht aus Kunstharz gebildet. Der technische Vorteil des Zusammenspiels von dem Bindemittel aus keramischer Masse und der Fixierschicht aus Kunstharz kann insbesondere darin gesehen werden, dass sich eine derartige Ausführungsform mittels bekannter Fertigungsprozesse herstellen lässt.

Bei einer weiteren bevorzugten Ausführungsform des Schleifmittels nach der Erfindung umfasst die keramische Masse Feldspat und/oder Ton. Grundsätzlich können für die Herstellung keramisch gebundener Agglomerate alle keramischen Massen herangezogen werden, die eine pastöse Konsistenz haben und damit einen Mischvorgang mit Schleifkörnern ermöglichen. Besonders gute Eignung hierfür haben keramische Massen mit Feldspat und/oder Ton gezeigt.

Bei einer weiteren bevorzugten Ausführungsform des Schleifmittels nach der Erfindung umfasst die keramische Masse eine Feldspatmischung, welche Feldspate unterschiedlicher Härte umfasst, und/oder eine Tonmischung, welche Tone unterschiedlicher Quarzanteile und/oder Härten umfasst. Der Vorteil liegt insbesondere darin, dass Granulate in unterschiedlichen Bindungshärten herstellbar sind.

Bei einer weiteren bevorzugten Ausführungsform des Schleifmittels nach der Erfindung beträgt das Mischungsverhältnis (in Vol-% oder Gew-%) von Feldspat zu Ton zwischen 90:10 bis 70:30, insbesondere 80:20. Der Vorteil eines derartigen Mischungsverhältnisses kann darin gesehen werden, dass die Festigkeit der Granulate variiert werden kann.

Bei einer weiteren bevorzugten Ausführungsform des Schleifmittels nach der Erfindung umfasst der Schleifkörper zudem Poren innerhalb der keramischen Masse. Durch derartige Poren kann eine weitere Anpassung an Anwendung und Lebensdauer des Schleifmittels erfolgen. Im Herstellungsprozess sind zwar unterschiedlichste Porenbildner denkbar, jedoch haben sich sowohl Gesteinsmehl wie auch Bims als besonders vorteilhaft erwiesen. Grundsätzlich eignet sich jeder Stoff, der sich veraschen lässt. Durch das Erzeugen von Poren in der keramischen Masse kann eine vorteilhafte Verteilung von Schleifkörnern und Poren innerhalb des Schleifkörpers erreicht werden, was sich vorteilhaft auf die Lebensdauer auswirkt.

Erfindungsgemäß wird zudem ein Verfahren zur Herstellung von agglomerierten Schleifkörpern vorgeschlagen, umfassend zumindest die folgenden Schritte:
a) Mischen von Schleifkörnern und Ausbrennmaterial zur Herstellung einer Feststoffmischung;
b) Zumischen von Feldspat und/oder Ton sowie eines Bindemittels und Klebemittels zu der Feststoffmischung zur Herstellung eines Teiges;
c) Granulieren des Teiges zur Herstellung von Granulaten;
d) Trocknen der Granulate;
e) Aufbringen des Granulate auf eine Brennplatte; und
f) Brennen der Granulate zur Herstellung von Schleifkörpern.

Als Teig soll die Mischung der genannten Inhalte verstanden werden, welche der Bildung der keramischen Masse dient. Als Granulat soll eine räumlich abgegrenzte Verbindung von zumindest mehreren Schleifkörnern und einem Bindemittel verstanden werden, welches als Zwischenprodukt dient und bei weiterer Verarbeitung zu Schleifkörpern verarbeitet wird. Unter Brennen soll jeder Erhitzungsvorgang, wie z.B. Sintern fallen, welcher der Ausbildung von erfindungsgemäßen Schleifkörpern dient

Mittels des erfindungsgemäßen Verfahrens ist es möglich, agglomerierte Schleifkörper herzustellen, deren Bindemittel aus einer keramischen Masse gebildet ist und die in vorteilhafter Weise die Lebensdauer, Schleifleistung und Anpassbarkeit eines Schleifmittels verbessern.

Bei einer bevorzugten Ausführungsform des Verfahrens nach der Erfindung wird in Schritt a) ein Ausbrennmaterial mit einem Porenvolumen von 60% bis 80 %, vorzugsweise 70 % gewählt. Das Ausbrennmaterial kann beispielsweise ein hochporöses Gesteinsmehl mit einem Porenvolumen von ungefähr 70% sein oder aber auch Bims oder ein anderer geeigneter Porenbildner.

Es ist denkbar, dass in Schritt b) die Viskosität des hergestellten Teiges eine pastöse Viskosität ist. Durch eine derartige pastöse Konsistenz kann ein Mischvorgang im Schritt b) verbessert werden, was zu einem homogenen Teig führt. Es ist beispielsweise denkbar, dass die pastöse Masse bzw. der Teig anschließend in unterschiedliche Formen gebracht werden kann, wie beispielsweise Platten, Stränge, Kugeln oder ähnliches.

Bei einer weiteren bevorzugten Ausführungsform des Verfahrens nach der Erfindung erfolgt im Schritt c) das Granulieren des Teiges mittels Streich-Pressen durch ein Lochmedium mit Löchern, deren jeweiliger Durchmesser zwischen 1,5 und 1,8 mm liegt, auf einer Kornschicht entsprechend der gewählten Schleifkörner zur Herstellung von Granulaten. Dadurch können nicht nur Granulate bzw. Schleifkörper mit einer hohen Lebensdauer und Schleifleistung erzeugt werden, sondern ein Zusammenkleben noch feuchter Granulate dadurch verhindert werden, dass sie auf eine Kornschicht aufgebracht und/oder mit Körnung abgestreut werden können.

Bei einer weiteren bevorzugten Ausführungsform des Verfahrens nach der Erfindung erfolgt in Schritt f) das Brennen dreistufig. In einer ersten Stufe wird innerhalb von ca. fünf Stunden auf eine Anfahrtemperatur von 600°C angeheizt. In einer zweiten Stufe wird auf eine Sintertemperatur zwischen 1190°C und 1230°C angeheizt und diese Temperatur anschließend für 10 Minuten beibehalten. In einer dritten Stufe wird die Sintertemperatur bis zu einer Zieltemperatur von 50°C reduziert. Bei diesem Brennvorgang können die getrockneten und locker auf eine Brennplatte aufgestreuten und/oder abgestreuten Granulate nach dem entsprechenden Temperaturprogramm der verwendeten Feldspatsorte und/oder Tonsorte gebrannt werden. Der Vorteil eines derartigen Sinterschrittes liegt darin, dass durch die langsame Aufheizzeit auf 600° C die in der Bindung enthaltene Feuchtigkeit langsam ausgetrieben und ein Platzen der Granulate verhindert werden kann.

Weitere Vorteile und vorteilhafte Ausgestaltungen des Gegenstandes der Erfindung sind der Beschreibung, der Zeichnung und den Patentansprüchen entnehmbar.

Ein Ausführungsbeispiel eines Schleifmittels nach der Erfindung und ein Ausführungsbeispiel des Herstellungsverfahrens eines Schleifkörpers nach der Erfindung sind in der Zeichnung schematisch vereinfacht dargestellt und werden in der nachfolgenden Beschreibung näher erläutert. Es zeigt:
- Figur 1: eine schematische Schnittansicht eines Schleifmittels nach der Erfindung;
- Figuren 2a,2b: Graphen von Vergleichsversuchen zwischen einem erfindungsgemäßen Schleifmittel und einem Referenzschleifmittel;
- Figur 3: Granulate nach deren Trocknung;
- Figur 4: Schleifkörper nach einem Brennvorgang;
- Figur 5: einen vergrößerten Ausschnitt aus Figur 4;
- Figur 6: Schleifkörper nach deren Absiebung;
- Figur 7: eine Draufsicht auf ein Schleifmittel der Körnung P80; und
- Figur 8: eine Draufsicht auf ein Schleifmittel der Körnung P180.

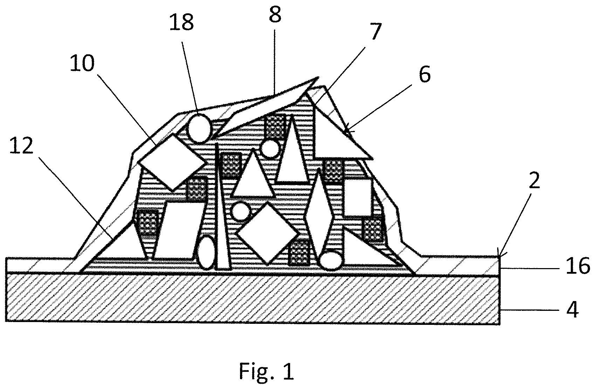

Figur 1 zeigt eine schematische Schnittansicht eines Abschnitts eines Schleifmittels 2 nach der Erfindung. Das Schleifmittel 2 umfasst eine Trägerschicht 4, welche beispielsweise aus Textil gebildet sein kann. Das Schleifmittel 2 umfasst zudem eine Vielzahl agglomerierter Schleifkörper 6, von welchen in Figur 1 ein einzelner Schleifkörper 6 dargestellt ist. Der Schleifkörper 6 ist auf der Trägerschicht 4 angeordnet und umfasst mittels eines Bindemittels gebundene Schleifkörner 8, 10, 12. Das Schleifmittel 2 umfasst eine Fixierschicht 16, welche zum Fixieren des Schleifkörpers 6 auf der Trägerschicht 4 dient.

Der Schleifkörper 6 umfasst Schleifkörner 8, 10, 12 unterschiedlicher Kornarten, wobei die Schleifkörner 8, 10, 12 zudem unterschiedliche Korngrößen aufweisen. Die Größe der Schleifkörner kann zwischen P60 und P1200 variieren. Das Bindemittel, welches die Schleifkörner 8, 10 und 12 verbindet, ist als keramische Masse 7 ausgebildet und der agglomerierte Schleifkörper 6 ist somit als ein nach einem Sinterverfahren hergestellter, gesinterter Schleifkörper 6 ausgebildet. Die keramische Masse 7 des Bindemittels umfasst eine Feldspatmischung, welche Feldspate unterschiedlicher Härte umfasst, sowie eine Tonmischung, welche Tone unterschiedlicher Quarzanteile und Härten umfasst. Das Mischungsverhältnis von Feldspat zu Ton in der keramischen Masse 7 kann zwischen 90:10 und 70:30 betragen, vorzugsweise bei 80:20 liegen. Zudem weist der Schleifkörper 6 Poren 18 innerhalb der keramischen Masse 7 auf.

Die Fixierschicht 16 ist aus Kunstharz ausgebildet und überdeckt die Trägerschicht 4 und das Schleifkorn 8 zumindest abschnittsweise.

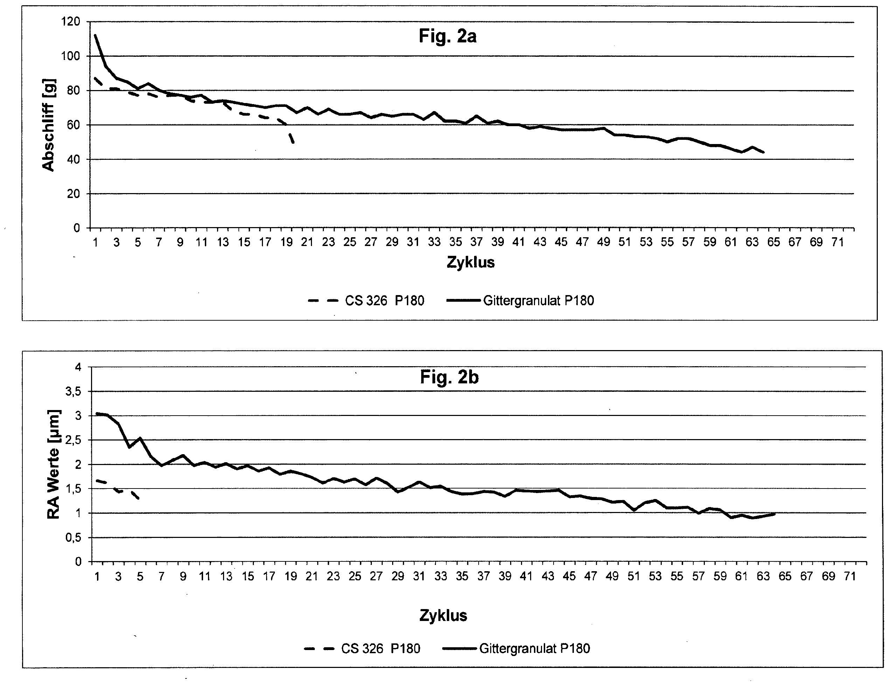

Die vorteilhafte Wirkung des erfindungsgemäßen Schleifmittels hinsichtlich verbesserter Lebensdauer und erhöhter Schleifleistung wird im Folgenden mit Verweis auf die Figuren 2a und 2b erläutert.

Dem erfindungsgemäßen Schleifmittel ("Gittergranulat") wurde ein Referenzschleifmittel der Sorte CS326 gegenübergestellt. Ein derartiges Schleifmittel wird beispielsweise als Breitbandschleifmittel von der Firma Klingspor AG vertrieben und umfasst als schleifaktiven Stoff kunstharzgebundene Korundagglomerate. Diese Agglomerate sind aufgebracht auf eine Trägerschicht aus Polyestergewebe. Das Referenzschleifmittel für den Vergleichsversuch wies eine Körnung von P180 auf. Das dem Referenzschleifmittel gegenübergestellte erfindungsgemäße Schleifmittel wies folgende Eigenschaften auf: Kornart: Korundagglomerat, Trägerschicht: Polyester und Körnung P180.

Figur 2a zeigt nun die Abschliffwerte des Referenzschleifmittels CS 326 P180 (gestrichelte Linie) gegenüber dem erfindungsgemäßen Schleifmittel Gittergranulat (durchgezogene Linie). In Figur 2a sind auf der X-Achse die Zyklen gegenüber der Abschliffmenge [g] auf der Y-Achse aufgetragen. Es zeigt sich, dass bereits nach einem Zyklus das erfindungsgemäße Schleifmittel eine Abschliffmenge von etwa 112g erzeugt hat, während das Referenzschleifmittel lediglich etwa 88g Abschliffmenge produzierte. Nach etwa 6 Zyklen gleichen sich die Abschliffmengen der beiden Schleifmittel an und bleiben ähnlich bis zu etwa 14 Zyklen. Dann beginnt das Referenzschleifmittel weniger Abschliff als das erfindungsgemäße Schleifmittel zu erzeugen, wobei das Referenzschleifmittel ab etwa 20 Zyklen einen starken Rückgang der Abschliffmenge verzeichnet. Nach etwa 21 Zyklen produziert das Referenzschleifmittel nur noch etwa 41g Abschliff. Das erfindungsgemäße Schleifmittel hingegen weist über die gesamte Testdauer höhere Abschliffmengen auf und produziert erst bei dem 65. Zyklus eine Abschliffmenge von 41g.

Figur 2b zeigt einen Vergleich von Ra-Werten (arithmetischer Mittelwert der Rauheit) der beiden verglichenen Schleifmittel, wobei auf der X-Achse die Zyklen gegenüber der Rauheit [µm] auf der Y-Achse aufgetragen sind. Figur 2b verdeutlicht, dass das Referenzschleifmittel (CS 326 Y) nach einem ersten Zyklus einen Ra-Wert von etwa 1,6 µm gegenüber einem Ra-Wert von etwa 3,05 des erfindungsgemäßen Schleifmittels aufweist. Nach etwa fünf Zyklen weist das Referenzschleifmittel einen Ra-Wert von nur noch etwa 1,25 µm auf, während dieser Wert von dem erfindungsgemäßen Schleifmittel erst nach 65 Zyklen erreicht wird.

Der Vergleich dieser beiden Schleifmittel stellt heraus, dass die Nutzung einer keramischen Masse 7 als Bindemittel und eine Sinterung zur Ausbildung eines gesinterten, agglomerierten Schleifkörpers signifikante Verbesserungen gegenüber einem vergleichbaren Schleifmittel bewirkt und zwar sowohl hinsichtlich Abschliffmenge, Rauheit und Lebensdauer.

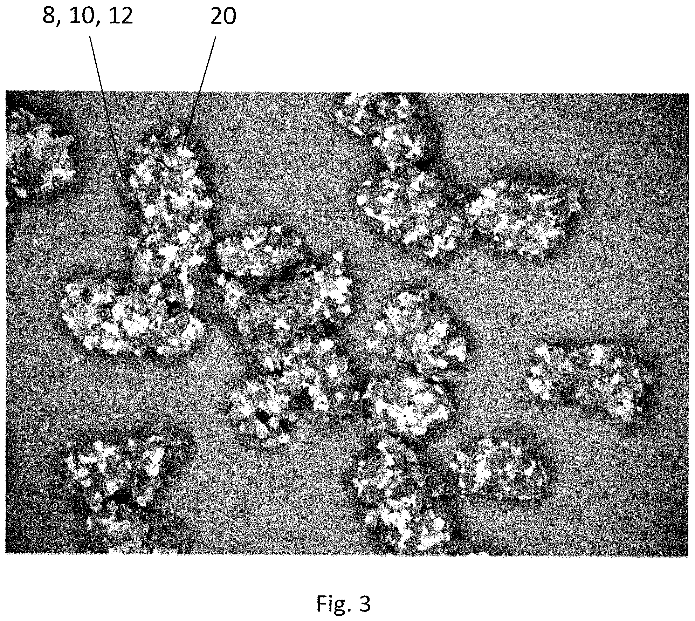

Mit Verweis auf die Figuren 3 bis 8 wird nun eine denkbare Ausgestaltung des Verfahrens zur Herstellung eines agglomerierten Schleifkörpers erläutert.

Zur Herstellung agglomerierter Schleifkörper werden zunächst Schleifkörner und Ausbrennmaterial zur Herstellung einer Feststoffmischung vermischt. Anschließend wird Feldspat und Ton sowie ein Bindemittel und ein Klebemittel zu der Feststoffmischung zugemischt, um einen Teig herzustellen, welcher hochviskos sein kann. Anschließend erfolgt ein Granulieren des Teiges mittels Streich-Pressen durch ein Lochmedium mit Löchern, deren Durchmesser zwischen 1,5 und 1,8 mm liegt, auf eine Kornschicht entsprechend der gewählten Schleifkörner zur Herstellung von Granulaten und/oder ein Abstreuen. Anschließend werden die Granulate getrocknet, was in Figur 3 gezeigt ist. Die in Figur 3 gezeigten Granulate, welche im Verlauf des Herstellungsverfahrens zu Schleifkörpern weiterverarbeitet werden, zeigen Schleifkörner 8, 10, 12 als die dunklen Körner und Ausbrennmaterial 20 als die weißen Stellen. Das Ausbrennmaterial kann ein hochporöses Gesteinsmehl mit einem Porenvolumen von ungefähr 70 % sein.

Nach dem Trocknen der Granulate werden diese auf eine Brennplatte aufgebracht und gebrannt, wodurch Schleifkörper gebildet werden. Dieser Brennvorgang kann ein Sintervorgang sein und kann dreistufig erfolgen, wobei in einer ersten Stufe innerhalb von ca. fünf Stunden auf eine Anfahrtemperatur von 600°C angeheizt wird, in einer zweiten Stufe auf eine Sintertemperatur zwischen 1.190°C und 1.230°C geheizt und diese Temperatur anschließend 10 Minuten beibehalten wird, und in einer dritten Stufe die Sintertemperatur bis zu einer Zieltemperatur von 50°C reduziert wird.

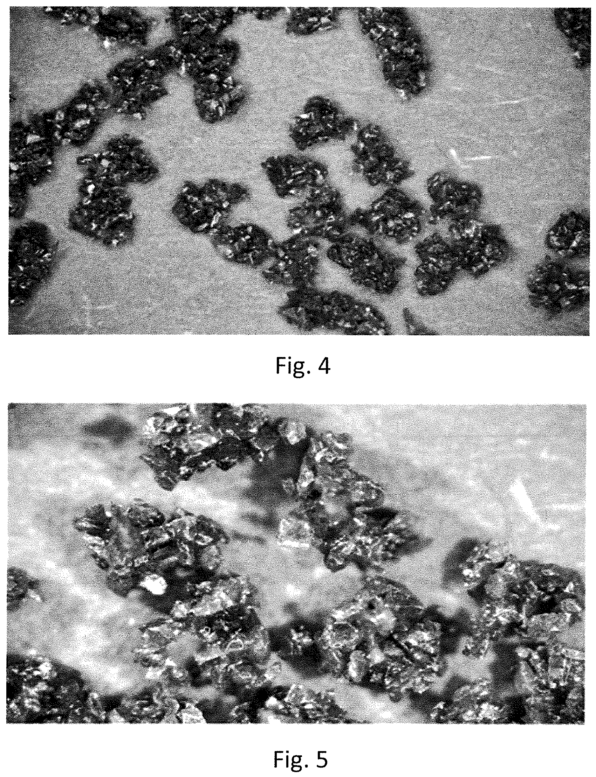

Die fertig gebrannten bzw. gesinterten Schleifkörper sind in Figur 4 beispielhaft als Schleifkörper der Körnung P80 gezeigt. Um eine gleichmäßige Körnung zu gewährleisten, wurden die gebrannten Schleifkörper zuvor abgesiebt, so dass die in Figur 4 gezeigten Schleifkörper an ihrer längsten Stelle etwa 1,18 bis 1,4 mm lang sind.

Eine Detailansicht der in Figur 4 gezeigten Schleifkörper ist in Figur 5 abgebildet.

Es ist auch denkbar, nach dem Abkühlen ein Trennen von zusammenhaftenden Schleifkörpern durchzuführen und hierfür einen Kornbrecher zu verwenden. Anschließend können die Schleifkörper auf eine gewünschte Größe abgesiebt, gewaschen, gespült und/oder getrocknet werden.

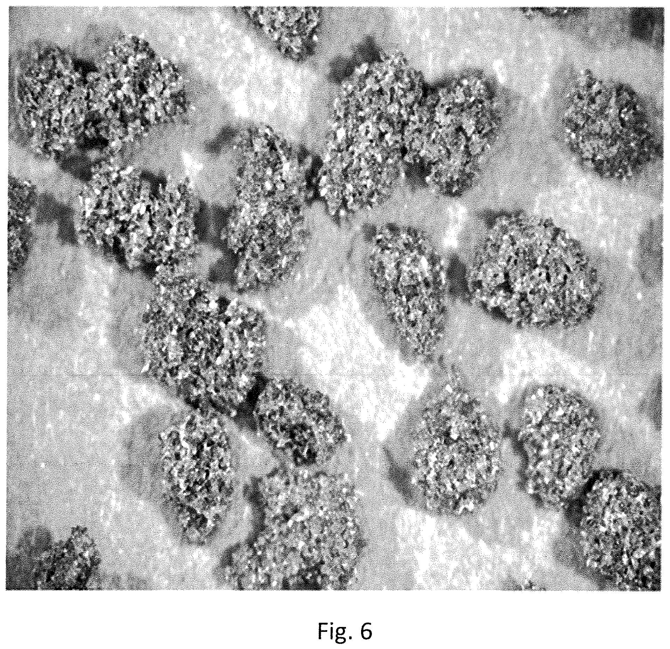

Figur 6 zeigt nun Schleifkörper der Körnung P180, wobei die einzelnen Schleifkörper eine Länge von 1,18 bis 1,4 mm aufweisen.

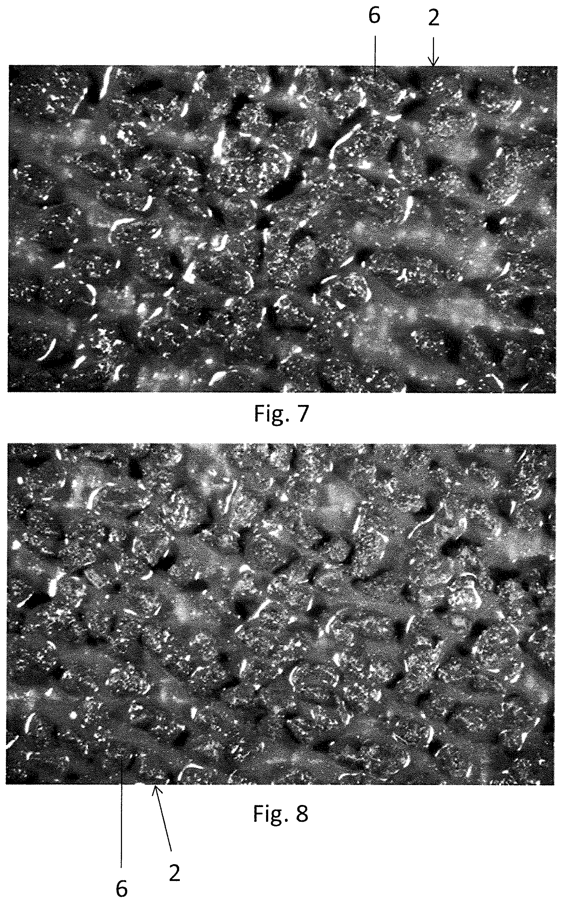

Abschließend zeigen die Figuren 7 und 8 jeweils eine Draufsicht auf die Wirkschicht eines Schleifmittels. In Figur 7 ist das Gittergranulat eines Schleifmittels mit der Körnung P80 dargestellt, dessen Schleifkörper einen Durchmesser von 0,8 bis 1 mm haben. Figur 8 zeigt ein Gittergranulat eines Schleifmittels mit der Körnung P180.

## Patentansprüche

1. Schleifmittel, umfassend
eine Trägerschicht (4), eine Vielzahl agglomerierter Schleifkörper (6), welche auf der Trägerschicht (4) angeordnet sind und jeweils mittels eines Bindemittels gebundene Schleifkörner (8, 10, 12) umfassen, und eine Fixierschicht (16) zum Fixieren der Schleifkörper (6) auf der Trägerschicht (4), **dadurch gekennzeichnet, dass** das Bindemittel eine keramische Masse (7) ist und die agglomerierten Schleifkörper (6) als gesinterte agglomerierte Schleifkörper (6) ausgebildet sind.

2. Schleifmittel nach Anspruch 1, wobei
jeder Schleifkörper (6) Schleifkörner (8, 10, 12) zumindest einer Kornart umfasst, welche gewählt ist aus der Gruppe umfassend Siliziumkarbid, Aluminiumoxid, Korund und/oder keramischer Korund.

3. Schleifmittel nach Anspruch 1 oder 2, wobei
jeder Schleifkörper (6) unterschiedliche Kornarten umfasst, deren Schleifkörner (8, 10, 12) unterschiedliche Korngrößen aufweisen.

4. Schleifmittel nach einem der Ansprüche 1 bis 3, wobei
die Fixierschicht (16) aus Kunstharz gebildet ist.

5. Schleifmittel nach einem der Ansprüche 1 bis 4, wobei
die keramische Masse (7) Feldspat und/oder Ton umfasst.

6. Schleifmittel nach Anspruch 5, wobei
die keramische Masse (7) eine Feldspatmischung umfasst, welche Feldspate unterschiedlicher Härte umfasst, und/oder
die keramische Masse (7) eine Tonmischung umfasst, welche Tone unterschiedlicher Quarzanteile und/oder Härten umfasst.

7. Schleifmittel nach einem der Ansprüche 5 oder 6, wobei das Mischungsverhältnis von Feldspat zu Ton zwischen 90:10 und 70:30 liegt, insbesondere 80:20 beträgt.

8. Schleifmittel nach einem der Ansprüche 1 bis 7, wobei der Schleifkörper (6) zudem Poren (18) innerhalb der keramischen Masse (7) umfasst.

9. Verfahren zur Herstellung von agglomerierten Schleifkörpern (6), umfassend zumindest die folgenden Schritte:
a. Mischen von Schleifkörnern (8, 10, 12) und Ausbrennmaterial zur Herstellung einer Feststoffmischung;
b. Zumischen von Feldspat und/oder Ton sowie eines Bindemittels und Klebemittels zu der Feststoffmischung zur Herstellung eines Teiges;
c. Granulieren des Teiges zur Herstellung von Granulaten;
d. Trocknen der Granulate;
e. Aufbringen der Granulate auf eine Brennplatte; und
f. Brennen der Granulate zur Herstellung von Schleifkörpern (6).

10. Verfahren nach Anspruch 9, wobei
in Schritt (a) ein Ausbrennmaterial mit einem Porenvolumen von 60 bis 80 %, vorzugsweise 70 % gewählt wird.

11. Verfahren nach einem der Ansprüche 9 oder 10, wobei in Schritt (c) das Granulieren des Teiges mittels Streich-Pressen durch ein Lochmedium mit Löchern, deren Durchmesser zwischen 1,5 und 1,8 mm liegt, auf eine Kornschicht entsprechend der gewählten Schleifkörner zur Herstellung von Granulaten erfolgt.

12. Verfahren nach einem der Ansprüche 9 bis 11, wobei
in Schritt (f) das Brennen dreistufig zumindest erfolgt, wobei
in einer ersten Stufe innerhalb von fünf Stunden auf eine Anfahrtemperatur von 600°C angeheizt wird,
in einer zweiten Stufe auf eine Sintertemperatur zwischen 1190 und 1230°C geheizt und diese Temperatur anschließend 10 Minuten beibehalten wird, und
in einer dritten Stufe die Sintertemperatur bis zu einer Zieltemperatur von 50°C reduziert wird.
